# EUROPEAN PATENT APPLICATION

(11) **EP 2 998 041 A1**
(43) Date of publication of application: **23.03.2016**
(21) Application number: 14798169.0
(22) Date of filing: 16.05.2014
(51) Int. Cl.: B21D 7/024, B21D 7/025, B25J 13/00

(54) **BENDING PROCESSING SYSTEM**

(30) Priority: 17.05.2013 JP 2013105249
(71) Applicant: Kabushiki Kaisha Opton, Aichi 489-8645 (JP)
(72) Inventor: YOGO, Teruaki, Seto-shi Aichi 489-8645 (JP); KANAMORI, Takuya, Seto-shi Aichi 4898645 (JP)
(74) Representative: Seemann & Partner
(86) International application number: PCT/JP2014/063111
(87) International publication number: WO 2014/185531

(57) **Abstract**

In a bending system comprising: a first bending device; a second bending device; and a control unit, the control unit performs bending of a workpiece by repeating, a specified number of times, a first bending step, a first moving step, a second bending step, and a second moving step.

## Description

### CROSS-REFERENCE TO RELATED APPLICATIONS

This international application claims the benefit of Japanese Patent Application No. 2013-105249 filed May 17, 2013 in the Japan Patent Office, and the entire disclosure of Japanese Patent Application No. 2013-105249 is incorporated herein by reference.

### TECHNICAL FIELD

The present invention relates to a bending system to bend an elongated workpiece (such as a pipe or a rod-shaped member) in a specified direction.

### BACKGROUND ART

There is known a conventional bending device to bend a workpiece at a plurality of points (see, for example, Patent Document 1). In the bending device, a bending mechanism is mounted to an end of an articulated robot having three sets of joints, each rotating around an axis parallel to an axial direction of the workpiece. The workpiece is held by a chuck mechanism. The bending mechanism is moved to a specified position by rotation of the joints. The chuck mechanism is moved in the axial direction of the workpiece by means of a moving mechanism.

### PRIOR ART DOCUMENTS

### PATENT DOCUMENTS

Patent Document 1: Japanese Unexamined Patent Application Publication No. 2001-212624.

### SUMMARY OF THE INVENTION

### PROBLEMS TO BE SOLVED BY THE INVENTION

The aforementioned bending device is configured such that the chuck mechanism is moved by means of the moving mechanism to thereby move the workpiece in the axial direction thereof. In this case, a sufficient space to allow movement of the chuck mechanism, which is holding the workpiece, is required. This may result in a larger size of the entire bending device. For example, a larger installation space may be required. In view of this, it may be conceivable to perform bending with the chuck mechanism mounted on the articulated robot and with the bending mechanism mounted on a fixing base.

However, mounting the chuck mechanism on the articulated robot may lead to a complicated structure. Also, a disadvantage may occur that the machining time of the workpiece cannot be reduced since bending itself is performed only by the bending mechanism mounted on the fixing base.

It is desirable to provide a bending system that has a simple structure requiring a smaller installation space and also achieves a reduced machining time of the workpiece.

### MEANS FOR SOLVING THE PROBLEMS

In this section of the specification, reference numerals used in the "MODE FOR CARRYING OUT THE INVENTION" section are assigned as necessary, for easier understanding of the present invention. It should be understood that the reference numerals are not to limit the scope of the present invention.

The present invention is a bending system (1) that includes a first bending device (10), a second bending device (60), and a control unit. The first bending device (10) comprises a first holding unit (40), a first bending unit (50), and a first moving unit.

The first holding unit (40) holds an elongated workpiece (5). The first bending unit (50) bends the workpiece (5) while the workpiece (5) is held by the first holding unit (40). The first moving unit moves the first holding unit (40), while the workpiece (5) is held by the first holding unit (40), to thereby move the workpiece (5) in its axial direction.

The second bending device (60) comprises a second holding unit (62, 70) and a second bending unit (62, 70, 72). The second holding unit (62, 70) holds the elongated workpiece (5). The second bending unit (62, 70, 72) bends the workpiece (5), while the workpiece (5) is held by the second holding unit (62, 70).

The control unit controls the first bending device (10) and the second bending device (60). The control unit performs bending of the workpiece (5) by repeating, a specified number of times, a first bending step, a first moving step, a second bending step, and a second moving step.

In the first bending step, the elongated workpiece (5) is bent by the first bending unit (50) while the elongated workpiece (5) is held by the first holding unit (40). In the first moving step, the workpiece (5) is moved in its axial direction by the first moving unit while the first bending step is being performed.

In the second bending step, after the workpiece (5) is held by the second holding unit (62, 70) subsequent to the first moving step, the holding state of the workpiece (5) by the first holding unit (40) is released, and then the workpiece (5) is bent by the second bending unit (62, 70, 72).

In the second moving step, the first holding unit (40) is moved to a next bending position while the second bending step is being performed. According to the above-described bending system (1), a smaller installation space can be achieved with its simple structure, and also machining time of the workpiece can be shortened. The reasons therefor will be described below.

In the first bending device (10), the workpiece (5) is bent while the workpiece (5) is held by the first holding unit (40), and concurrently the workpiece (5) is moved in its axial direction (at the time, the holding state by the second holding unit (62, 70) is released). Accordingly, the workpiece (5) can be bent while being moved in its axial direction.

When the movement in the axial direction (the movement of the workpiece (5)) is completed, the workpiece (5) is held by the second holding unit (62, 70), and the holding state of the workpiece (5) by the first holding unit (40) is released. Then, the workpiece (5) is bent by the second bending device (60). Concurrently, the first holding unit (40) is moved to a next bending position of the workpiece (5).

That is, while bending of the workpiece (5) is being performed by the second bending device (60), the first holding unit (40) is moved to the next bending position. By performing bending and moving of the workpiece (5) by the first bending device (10) and the second bending device (60) in a cooperative manner as described above, loss of machining time can be reduced to the minimum. That is, the bending time of the workpiece (5) can be shortened.

Also, in the first bending device (10), the workpiece (5) is bent while the workpiece (5) is concurrently moved. In this case, since the length of the workpiece (5) becomes shorter in accordance with a part for which bending is finished, an installation distance between the first bending device (10) and the second bending device (60) can be within the length of the workpiece (5). Accordingly, the installation space of the bending system (1) can be reduced.

Further, unlike conventional bending mechanisms, providing the first holding unit (40) and the second holding unit (62, 70) may eliminate the need for a chuck device. Accordingly, the bending system (1) can be compact in size.

Various configurations are conceivable for the first bending device (10). For example, the first bending device (10) may comprise a first base (22) configured for installation; an A1 joint (18) provided to the first base (22) so as to rotate around an axis of the first base (22); an A2 joint (12) provided to the A1 joint (18) so as to rotate around an axis perpendicular to a rotation axis of the first base (22); a first intermediate arm (26) provided in a direction perpendicular to a rotation axis of the A2 joint (12); an A3 joint (14) provided at a distal end of the first intermediate arm (26) so as to rotate around an axis parallel to the rotation axis of the A2 joint (12); an A4 joint (20) provided in a direction perpendicular to a rotation axis of the A3 (14) joint so as to rotate around an axis perpendicular to the rotation axis of the A3 joint (14); a second intermediate arm (28) provided in a direction of a rotation axis of the A4 joint (20); an A5 joint (21) provided at a distal end of the second intermediate arm (28) so as to rotate around an axis perpendicular to the rotation axis of the A4 joint (20); an A6 joint (16) provided in a direction perpendicular to a rotation axis of the A5 joint (21) so as to rotate around an axis perpendicular to the rotation axis of the A5 joint (21); and a distal end arm (32) provided in a direction perpendicular to a rotation axis of the A6 joint (16). The first holding unit (40) and the first bending unit (50) may be mounted to the distal end arm (32).

That is, the first bending device (10) may be configured to have seven axes, including six axes of the A1 to A6 joints and one axis of the first bending unit (50). With such configuration, the first bending device (10) may be formed by employing a so-called articulated robot having a plurality of joints, and thus the bending system (1) may be formed more easily and at a lower cost.

Also, the second bending device (60) may include an eleventh base (122) configured for installation; a B1 joint (118) provided to the eleventh base (122) so as to rotate around an axis of the eleventh base(122); a B2 joint (112) provided to the B1 joint (118) so as to rotate around an axis perpendicular to a rotation axis of the eleventh base (122); an eleventh intermediate arm (126) provided in a direction perpendicular to a rotation axis of the B2 joint (112); a B3 joint (114) provided at a distal end of the eleventh intermediate arm (126) so as to rotate around an axis parallel to the rotation axis of the B2 joint (112); a B4 joint (120) provided in a direction perpendicular to a rotation axis of the B3 joint (114) so as to rotate around an axis perpendicular to the rotation axis of the B3 joint (114); a twelfth intermediate arm (128) provided in a direction of a rotation axis of the B4 joint (120); a B5 joint (121) provided at a distal end of the twelfth intermediate arm (128) so as to rotate around an axis perpendicular to the rotation axis of the B4 joint (120); a B6 joint (116) provided in a direction perpendicular to a rotation axis of the B5 joint (121) so as to rotate around an axis perpendicular to the rotation axis of the B5 joint (121); and a distal end arm (132) provided in a direction perpendicular to a rotation axis of the B6 joint (116). Further, the second holding unit (62, 70) and the second bending unit (62, 70, 72) may be mounted to the distal end arm (132).

That is , the second bending device (60) may be configured to have seven axes, including six axes of the B1 to B6 joints and one axis of the second bending unit (62, 70, 72). With such configuration, the second bending device (60) may be formed by employing a so-called articulated robot in the same manner as the first bending device (10), and thus the bending system (1) may be formed more easily and at a lower cost.

Also, the second bending device (60) may further comprise a tilt mechanism (170) configured to be tiltable at an optional angle relative to an axial direction of the workpiece (5) when bending the workpiece (5).

The second bending device (60) may comprise: for example, a bending die having, in its outer periphery, a groove corresponding to a diameter of the workpiece (5) and being formed according to a bending radius; and a bending arm provided at a position facing the bending die, and may be configured such that a direction of bending by these components is tiltable at an optional angle relative to an axis of the workpiece (5).

When causing the first bending device (10) to operate and concurrently causing the second bending device (60) to operate (for example, when rotationally driving the bending arm by a bending motor or by hand), it is possible to bend the workpiece (5) with a tilt at an optional angle.

Moreover, at least one of the first bending device (10) or the second bending device (60) may be configured to be movable in a direction of at least one axis of an X-axis that connects an installation position of the first bending device (10) and an installation position of the second bending device, a Y-axis that is horizontal to an installation surface of the second bending device (60) and perpendicular to the X-axis, or a Z-axis that is perpendicular to the X-axis and the Y-axis.

With such configuration, it is possible to move one or both of the first bending device (10) and second bending device (60) in at least one direction of the X-axis, the Y-axis, or the Z-axis. Thus, movable axes are increased, and more complicated bending can be performed.

### BRIEF DESCRIPTION OF THE DRAWINGS

FIG. 1 is a view showing a configuration of a bending system.
FIG. 2 is a view showing a configuration of a fixed bending device.
FIG. 3 is a flowchart showing a flow of a control process.
FIG. 4 is a view showing a configuration of a fixed bending device of a second embodiment.
FIG. 5 is a view showing a configuration of a bending device in a case of using an articulated robot having a plurality of joints as a second bending device.
FIG. 6 is an enlarged view the fixed bending device.
FIG. 7 is a view showing an operation of a bending system 1.
FIG. 8 is a schematic view of a bending system of a fourth embodiment.
FIG. 9 is a schematic view of a bending system of another embodiment.

### EXPLANATION OF REFERENCE NUMERALS

1...bending system, 5...workpiece, 7...installation surface,
10...articulated robot, 12...A2 joint, 14...A3 joint, 16...A6 joint,
18...A1 joint, 20...A4 joint, 21...A5 joint, 22...A1 fixing portion,
24...first swivel base, 26...A1 arm, 28...A2 arm,
30...second swivel base, 32...distal end arm,
40...clamp mechanism, 50...bending mechanism,
52...bending die, 54...bending arm, 56...bending motor,
60...fixed bending device, 61...support,
62...bending die, 63...supporting plate, 64...groove,
66...bending arm, 67...bending motor, 68...fixing base,
69...first cylinder, 70...clamping die 72...pressure die,
74...second cylinder, 100...articulated robot,
112...B2 joint, 114...B3 joint, 116...B6 joint, 118...B1 joint,
120...B4 joint, 121...B5 joint, 122...B1 fixing portion,
126...B1 arm, 128...B2 arm, 132...distal end arm,
160...bending device, 170...tilt mechanism,
172...motor, 174...support base, 176...support extension portion,
178...extension motor 180...motor, 190...moving mechanism,
192...movement motor, 194...ball screw, 195...moving base,
196...movement motor, 198...ball screw.

### MODE FOR CARRYING OUT THE INVENTION

Hereinafter, an embodiment to which the present invention is applied will be described with reference to the drawings. The embodiment of the present invention should not be limited to the below-described embodiment, and may be practiced in various forms within the technical scope of the present invention.

### [First Embodiment]

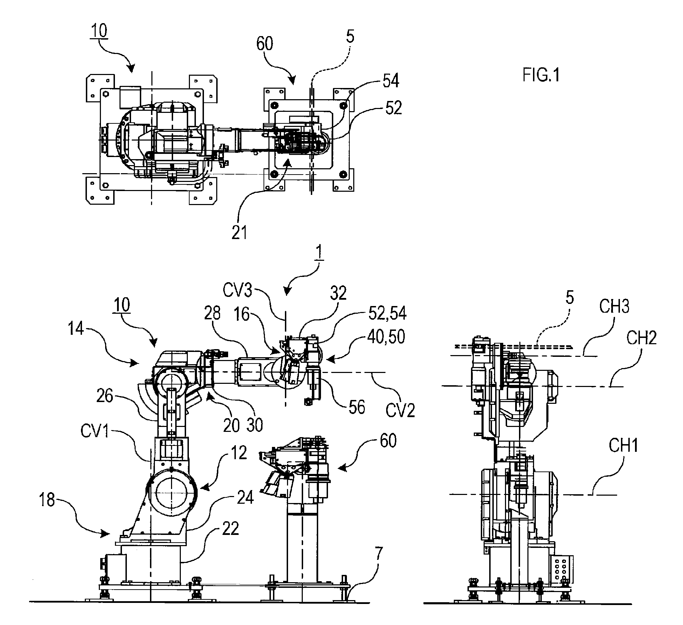

As shown in FIG. 1, a bending system 1 comprises an articulated robot 10 and a fixed bending device 60, as well as a not-shown control unit. The articulated robot 10 and the fixed bending device 60 are placed on a flat installation surface 7 as shown in FIG. 1.

As shown in FIG. 1, the articulated robot 10 comprises an A1 fixing portion 22, an A1 joint 18, an A2 joint 12, an A3 joint 14, an A4 joint 20, an A5 joint 21, an A6 joint 16, an A1 arm 26, an A2 arm 28, and a distal end arm 32. That is, the articulated robot 10 has six axes of the A1 to A6 joints, and also has an axis based on a later-described bending mechanism 50.

The A1 fixing portion 22 is a base portion configured for installation of the articulated robot 10 itself on the installation surface 7. The A1 joint 18 is fixed to the A1 fixing portion 22 so as to rotate around an axis of the A1 fixing portion 22, and comprises a well-known mechanism that rotationally drives a first swivel base 24 around a vertical axis (a rotation axis of the A1 fixing portion 22) CV1 at a specified angle.

The A2 joint 12 is a joint that is provided to the A1 joint 18 through the first swivel base 24, and rotates around an axis perpendicular to the rotation axis of the A1 fixing portion 22. In a direction perpendicular to a rotation axis of the A2 joint 12, one end of the A1 arm 26 having a generally cylindrical shape is mounted to the A2 joint 12. The A2 joint 12 comprises a well-known mechanism that rotationally drives the A1 arm 26 around a horizontal axis CH1 by a specified angle.

The horizontal axis CH1 of the A2 joint 12 and the vertical axis CV1 of the A1 joint 18 are mutually orthogonal. The A3 joint 14, which is mounted to an end (an opposite end to the end mounted to the A2 joint 12) of the A1 arm 26, comprises a well-known mechanism that rotationally drives the later-described A2 arm 28 at a specified angle around an axis CH2 parallel to the horizontal axis CH1 of the A2 joint 12.

The A4 joint 20 is mounted to the A3 joint 14 in a direction perpendicular to a rotation axis of the A3 joint 14. The A4 joint 20 is a joint that rotates around an axis perpendicular to the rotation axis of the A3 joint 14.

A second swivel base 30 is mounted to the A4 joint 20 coaxially with and in a rotation axis direction of the A4 joint 20, and one end of the A2 arm 28 having a generally cylindrical shape is mounted to the second swivel base 30 in a rotation axis direction of the second swivel base 30 (in the rotation axis direction of the A4 joint 20).

The A4 joint 20 comprises a well-known mechanism that rotationally drives the second swivel base 30 at a specified angle around an axis CV2 (a rotation axis of the A4 joint 20) perpendicular to the horizontal axis CH1 of the A2 joint 12 and the horizontal axis CH2 of the A3 joint 14.

The A5 joint 21, which is mounted to a distal end of the A2 arm 28, comprises a well-known mechanism of rotating around an axis CV3 perpendicular to the rotation axis of the A4 joint 20. The A6 joint 16 is a joint that is mounted to the A5 joint 21 in a direction perpendicular to a rotation axis of the A5 joint 21 and rotates around an axis perpendicular to the rotation axis of the A5 joint 21.

A distal end arm 32 is mounted to the A6 joint 16 in a direction perpendicular to a rotation axis of the A6 joint 16. The distal end arm 32 rotates, by means of the A6 joint 16, around an axis CH3 that is parallel to the horizontal axis CH1 of the A2 joint 12 and the horizontal axis CH2 of the A3 joint 14.

A clamp mechanism 40 is mounted to a distal end of the distal end arm 32 of the articulated robot 10. The clamp mechanism 40 comprises a not-shown claw portion and a not-shown cylinder. The claw portion comprises a fixed claw portion and a movable claw portion provided opposite to the fixed claw portion. By operating the movable claw portion by means of the cylinder, an elongated workpiece 5, such as a pipe, can be held between the fixed claw portion and the movable claw portion.

A bending mechanism 50 is mounted to the distal end arm 32. As shown in FIG. 1, the bending mechanism 50 comprises a bending die 52 that is formed according to a bending radius of the workpiece 5. A groove (not shown) according to the diameter of the workpiece 5 is formed at an outer periphery of the bending die 52.

A bending arm 54 is provided to the distal end arm 32 at a position facing the bending die 52. The bending arm 54 is mounted to the distal end arm 32 so as to be rotationally driven by a bending motor 56.

By holding the workpiece 5 with the fixed claw portion and the movable claw portion of the clamp mechanism 40 and by tightly pressing the workpiece 5 with the bending arm 54 around the groove of the bending die 52 in the bending mechanism 50, bending of the workpiece 5 is performed.

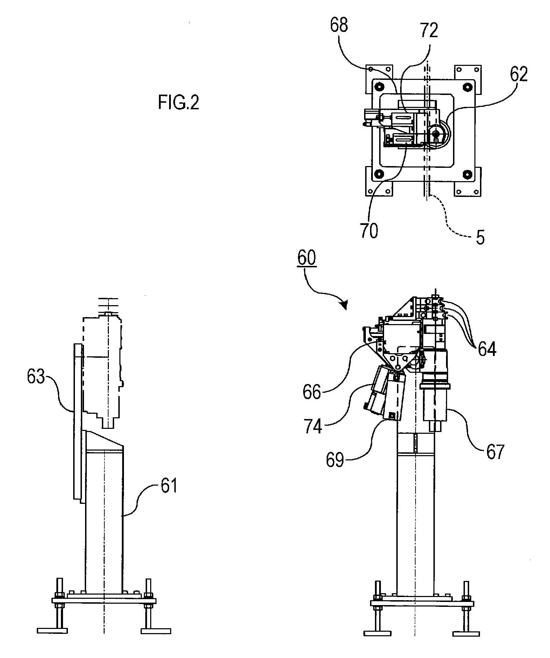

As shown in FIG. 2, the fixed bending device 60 comprises a bending die 62 that is formed according to a bending radius of an elongated workpiece 5, such as a pipe. A groove 64 according to a diameter of the workpiece 5 is formed at an outer periphery of the bending die 62.

The bending die 62 along with the bending arm 66 is rotatably held by the fixing base 68 through the support 61 and the supporting plate 63. The bending arm 66 is provided so as to be rotationally driven by the bending motor 67.

The bending die 62 is shown in FIG. 2 in the form of a bending die having a plurality of grooves 64 stacked together. The grooves 64 may be provided in plurality according to the bending radius of the workpiece 5. Alternatively, a bending die having a single groove 64 may be employed as the bending die 62.

A clamping die 70 is movably held on the bending arm 66 so as to face the bending die 62. The clamping die 70 is configured so as to be driven by the first cylinder 69 and to hold the workpiece 5 in association with the bending die 62.

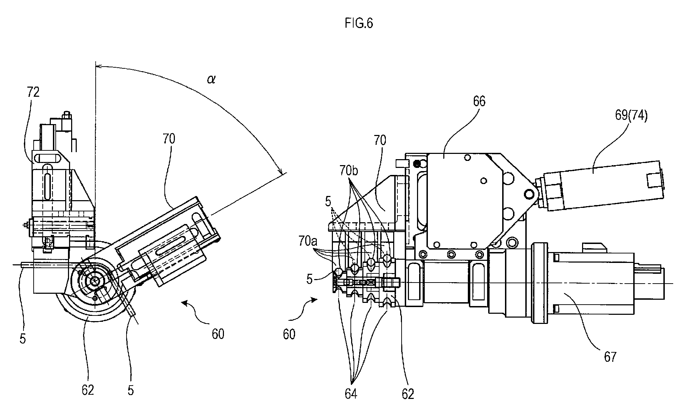

That is, the workpiece 5 can be held by the bending die 62 and the clamping die 70 together, and the bending die 62 and the clamping die 70 achieve the function of a chuck mechanism. FIG. 6 shows an enlarged view of the fixed bending device 60. In FIG. 6, the same components as in FIG. 2 are assigned the same reference numerals.

As shown in FIG. 6, the workpiece 5 is held by the groove 64 in the bending die 62 and a groove 70b in a chuck 70a of the clamping die 70. Each chuck 70a has a different size (length) depending on a curvature radius of each groove 64.

The bending die 62 and the clamping die 70 operate in conjunction with feed control of the workpiece 5. Specifically, when the workpiece 5 is fed to a desired position, the clamping die 70 is moved toward the bending die 62, and thereby the workpiece 5 is held therebetween.

According to the present embodiment as above, the workpiece 5 can be held appropriately by the bending die 62 and the clamping die 70 of the fixed bending device 60, and thus a chuck mechanism provided to a conventional bending device can be omitted. In other words, no chuck mechanism is required to be separately provided.

Also, in the present embodiment, control is performed such that the force of clamping (i.e., the clamping force) by the bending die 62 and the clamping die 70 is kept constant according to the thickness (diameter) of the workpiece 5. Such control allows inhibition of slippage of the workpiece 5, which is being held, between the bending die 62 and the clamping die 70, and also allows avoidance of unnecessary scratch on the workpiece 5.

According to the present embodiment as above, manufacture of products of higher quality can be achieved. A pressure die 72 is provided side by side with the clamping die 70. The pressure die 72 is driven by a second cylinder 74. The pressure die 72 is configured to be abutted to the workpiece 5 to receive a reaction force during bending.

The control unit comprises a CPU, a ROM, a RAM, an I/O, a display screen, and a setting unit, which are not shown, and controls the articulated robot 10 and the fixed bending device 60 based on programs stored in the ROM and on bending conditions, and the like, set by the setting unit.

The setting unit, which is a so-called touch screen, is configured such that bending conditions, and the like, can be set by a setting person pressing down setting items displayed on the display screen with, for example, a finger.

### (Description of Control Process)

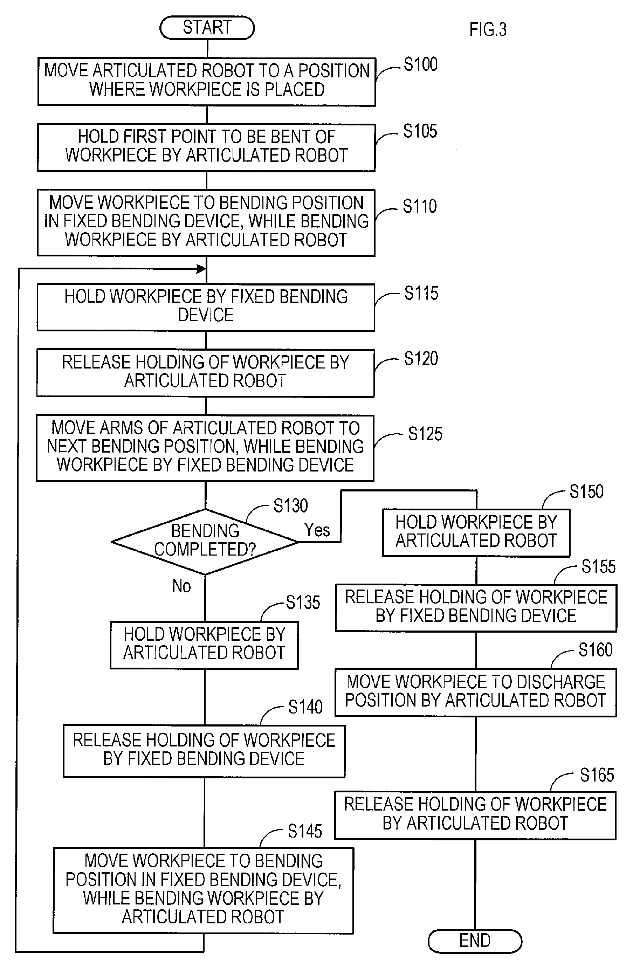

Next, a control process executed by the control unit will be described based on the flowchart shown in FIG. 3.

Hereinafter, to operate the A2 joint 12, the A3 joint 14, the A6 joint 16, the A1 joint 18, the A4 joint 20, the A5 joint 21, the A1 fixing portion 22, the first swivel base 24, the A1 arm 26, the A2 arm 28, the second swivel base 30, and the distal end arm 32 of the articulated robot 10 may be simply referred to as "to operate the arms".

In the control process, the CPU operates the arms of the articulated robot 10 in S100, to move the clamp mechanism 40 and the bending mechanism 50 to a position where the workpiece 5 is placed. In subsequent S105, a first point to be bent of the workpiece 5 is held by the clamp mechanism 40 of the articulated robot.

In subsequent S110, the arms of the articulated robot 10 are operated, while the workpiece 5 held in S105 is bent by the bending mechanism 50, to move the workpiece 5 to a bending position in the fixed bending device 60.

In S115, the workpiece 5 is held by the bending die 62 and clamping die 70 of the fixed bending device 60. In S120, the holding of the workpiece 5 by the clamp mechanism 40 of the articulated robot 10 is released. Accordingly, the workpiece 5 becomes held by the fixed bending device 60.

In S125, while the workpiece 5 is bent by the fixed bending device 50, the arms of the articulated robot 10 are operated to move the clamp mechanism 40 and the bending mechanism 50 to a next bending position.

For example, the arms (the clamp mechanism 40 and the bending mechanism 50) are numerically controlled (NC-controlled) based on a bending shape of the workpiece 5 to be bent. In S130, it is determined whether bending has been completed. Specifically, it is determined whether a specified number of times of bending has been completed by the articulated robot 10 and the fixed bending device 60.

If it is determined that bending has been completed (S130: Yes), the present process proceeds to S150; if it is determined that bending has not been completed (S130: No), the present process proceeds to S135. In S135, the workpiece 5 is held by the clamp mechanism 40 of the articulated robot 10. In S140, holding of the workpiece by the bending die 62 and the clamping die 70 of the fixed bending device 60 is released.

In subsequent S145, while the workpiece 5 is being bent by the articulated robot 10, the arms of the articulated robot 10 are operated to move the workpiece 5 to a bending position in the fixed bending device 60. Then the present process returns to S115, and bending is repeated.

In S150, the workpiece 5 is held by the clamp mechanism 40 of the articulated robot 10. In subsequent S155, the holding state of the workpiece 5 by the bending die 62 and the clamping die 70 of the fixed bending device 60 is released.

In subsequent S160, the arms of the articulated robot 10 are operated to move the clamp mechanism 40 and the bending mechanism 50 to a discharge position of the workpiece 5. In subsequent S165, the holding state of the workpiece 5 by the clamp mechanism 40 of the articulated robot 10 is released to discharge the workpiece 5, and then the control process is terminated.

### (Operation of Bending System 1)

Hereinafter, the operation of the bending system 1 will be described.

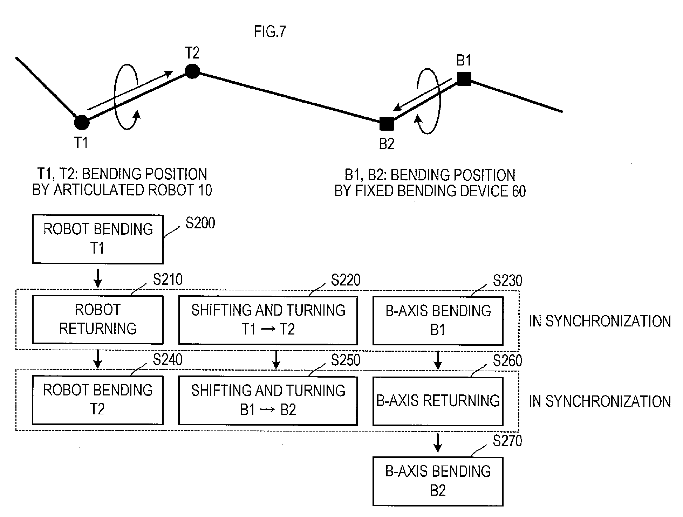

FIG. 7 shows an example of the operation of the bending system 1. In FIG. 7, T1 and T2 represent bending positions of the workpiece 5 by the articulated robot 10. Specifically, T1 represents the first-time (first) bending position, whereas T2 represents the second-time bending position. B1 and B2 represent bending positions of the workpiece 5 by the fixed bending device 60. Specifically, B1 represents the first-time (first) bending position, whereas B2 represents the second-time bending position.

In FIG. 7, bending by the articulated robot 10 is referred to as "robot bending", whereas bending by the fixed bending device 60 is referred to as "B-axis bending". In the example of FIG. 7, the articulated robot 10 (specifically the clamp mechanism 40 and the bending mechanism 50 mounted to the distal end arm 32) is first moved to the bending position T1, and bending of the workpiece 5 is performed at the bending position T1 by the articulated robot 10 (S200). Specifically, the bending mechanism 50 rotates, and bending is performed.

Thereafter, the bending mechanism 50 returns to an initial position (S210). At the time, the workpiece 5 becomes held by the fixed bending device 60, and bending by the fixed bending device 60 is performed at the bending position B1 (S230). Specifically, the clamping die 70 of the fixed bending device 60 rotates, and bending is performed. Then, the clamping die 70 returns to an initial position (S230).

In this case, the bending position T1 and the bending position B1 may be related to each other. Specifically, it may be configured such that when the articulated robot 10 moves to the bending position T1, the fixed bending device 60 is located at the bending position B1 with respect to the workpiece 5.

Subsequently, following the bending by the fixed bending device 60, the articulated robot 10 moves to the next bending position T2 (S220). Here, shifting and turning of the arms of the articulated robot 10 is performed concurrently.

Then, at the bending position T2, the workpiece 5 becomes held by the articulated robot 10, and bending by the articulated robot 10 is performed (S240). The articulated robot 10 bends the workpiece 5 while holding the workpiece 5, and concurrently moves such that the bending position by the fixed bending device 60 is shifted from B1 to B2 (S250). In other words, the articulated robot 10 moves such that the position of the fixed bending device 60 with respect to the workpiece 5 is shifted from the bending position B1 to the bending position B2. In this case, when the articulated robot 10 completes its movement (S250), a relative position between the fixed bending device 60 and the workpiece 5 is changed, and bending by the fixed bending device 60 at the bending position B2 may become enabled.

Then, the workpiece 5 becomes held by the fixed bending device 60, and bending is performed at the bending position B2 (S270).

### (Features of Bending System 1)

In the bending system 1 as described above, the articulated robot 10 bends the workpiece 5 while holding the workpiece 5 with the clamp mechanism 40 and concurrently moves the workpiece 5 in the axial direction (at the time, the holding state of the workpiece 5 is released in the fixed bending device 60). Accordingly, the articulated robot 10 can perform bending while moving the workpiece 5 in the axial direction.

When the movement in the axial direction is completed, the fixed bending device 60 holds the workpiece 5, whereas the holding state of the workpiece 5 by the clamp mechanism 40 of the articulated robot 10 is released. Then, the fixed bending device 60 bends the workpiece 5 and concurrently moves the clamp mechanism 40 and the bending mechanism 50 to a next bending position of the workpiece 5.

As described above, the articulated robot 10 and the fixed bending device 60 operate independently, although in an interlocking manner, to thereby perform bending of the workpiece 5 and movement of the workpiece 5 and the mechanisms continuously. This may reduce the loss of the bending time of the workpiece 5 to a minimum. That is, the bending time of the workpiece 5 may be shortened.

Also, the articulated robot 10 moves the workpiece 5 while bending the workpiece 5. Accordingly, an installation distance between the articulated robot 10 and the fixed bending device 60 can be reduced since the length of the workpiece 5 becomes shorter according to a portion where bending has been completed. Thus, the bending system 1 can be compact in size.

Further, use of a so-called articulated robot 10 having a plurality of joints allows formation of the bending system 1 easily and at a lower cost.

### [Second Embodiment]

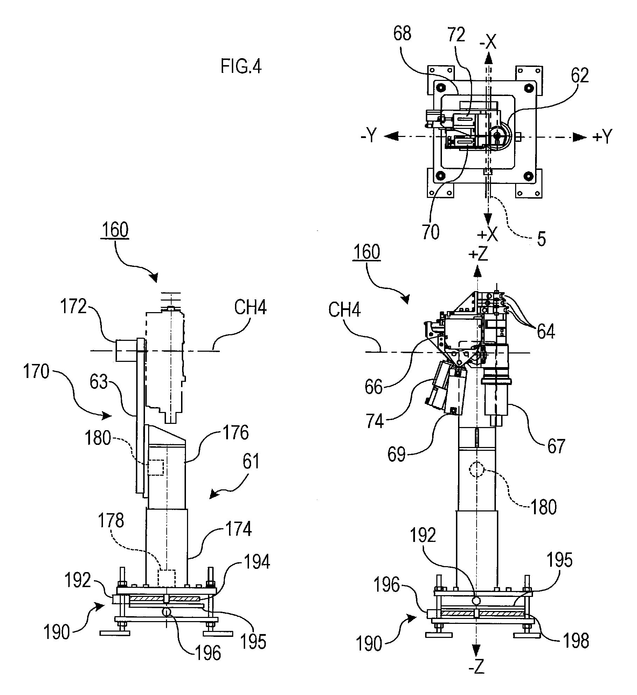

Next, a description will be given of a second embodiment in which a direction of bending by the fixed bending device 60 of the first embodiment is made changeable, with reference to FIG. 4. In the bending system 1 of the second embodiment, the configuration of the articulated robot 10 is the same, and only the configuration of the fixed bending device 60 is slightly different. Thus, the description will be given only of such differences.

According to the second embodiment, the bending system 1 is configured to bend the workpiece 5 with the bending mechanism 50 that is mounted to the articulated robot 10 and to concurrently turn the workpiece 50 in the fixed bending device 60.

As shown in FIG. 4, the fixed bending device 160 of the second embodiment includes a tilt mechanism 170 that allows rotation of the supporting plate 63 with respect to the support 61 of the bending device 60 of the first embodiment.

The tilt mechanism 170 comprises a support 61, a supporting plate 63, a motor 172, and a motor 180. The mechanisms (the bending die 62, the bending arm 66, etc.) mounted to the supporting plate 63 are rotatable around a horizontal axis CH4 by means of the motor 172 mounted to an upper end portion of the supporting plate 63.

The supporting plate 63 is configured to be rotatable by means of the motor 180 provided inside the support base 174 and positioned correspondingly to a lower end portion of the supporting plate 63. The support 61 is formed of the support base 174 having a cylindrical shape and a support extension portion 176 internally inserted in the support base 174. An extension motor 178 and a not-shown ball screw are built in the support base 174. The support extension portion 176 is extendable and contractible with respect to the support base 174 (in a Z-axis direction in FIG. 4) by means of the extension motor 178 and the ball screw.

In the bending device 160, a moving mechanism 190 is provided under the support base 174. The moving mechanism 190 is a mechanism to move the support base 174 in an X-axis direction and a Y-axis direction in FIG. 4. Movement in the X-axis direction is achieved by a movement motor 192 and a ball screw 194. Specifically, the rotation of the movement motor 192 is converted into a moving motion in the X-axis direction through the ball screw 194, to thereby move the support base 174 in the X-axis direction.

The movement of the support base 174 in the Y-axis direction is achieved by a movement motor 196 and a ball screw 198. According to the fixed bending device 160 with the tilt mechanism 170 and the moving mechanism 190, it is possible to rotate by a desired angle the mechanism mounted to the supporting plate 63 by means of the motor 172, and thus it is possible to bend the workpiece 5 not only in the horizontal direction relative to the installation surface but also at a specified angle relative to the axial direction of the workpiece 5.

When the supporting plate 63 is rotated by means of the motor 172, the positions of the bending die 62 and the bending arm 66, which are the mechanisms mounted to the supporting plate 63, change. As a result, by extending or contracting the support extension portion 176 in the Z-axis direction by means of the extension motor 178, and also rotating the supporting plate 63 by means of the motor 180 and moving the position of the bending device 160 itself in the X-axis direction or the Y-axis direction in FIG. 4 by means of the moving mechanism 190, the positions of these components are located at the same positions as in the fixed bending device 60 of the first embodiment.

Specifically, initial positions of the bending die 62 and the bending arm 66 are changed when the supporting plate 63 is rotated by means of the motor 172. More specifically, an X-coordinate value, a Y-coordinate value, and a Z-coordinate value indicating the positions of the bending die 62 and the bending arm 66 are changed.

A change in the X-coordinate value may be corrected by a movement in the X-axis direction by means of the moving mechanism 190 (the movement motor 192 and the ball screw 194). A change in the Y-coordinate value may be corrected by a movement in the Y-axis direction by means of the moving mechanism 190 (the movement motor 196 and the ball screw 198).

A change in the Z-coordinate value may be corrected by extension or contraction of the support extension portion 176. By such corrections, it is possible to maintain the positions of the bending die 62 and the bending arm 66 at the initial positions.

When the articulated robot 10 is operated in the same manner as in the first embodiment, and also an angle between the supporting plate 63 of the fixed bending device 160 and the mechanisms mounted to the supporting plate 63 are set to 0°, it is possible to bend the workpiece 5 in a horizontal direction in the same manner as in the first embodiment.

When the articulated robot 10 is operated with the angle of the mechanisms mounted to the supporting plate 63 set to an optional angle, it is possible to bend the workpiece 5 with a tilt at the optional angle in the axial direction. For example, if the angle of the mechanisms mounted to the supporting plate 63 is set to 90°, it is possible to bend the workpiece 5 in a vertical direction.

It may be configured such that the position of the bending device 160 itself is moved in the X-axis direction or the Y-axis direction in FIG. 4 by means of the moving mechanism 190 aside from the tilt mechanism 170.

### [Third Embodiment]

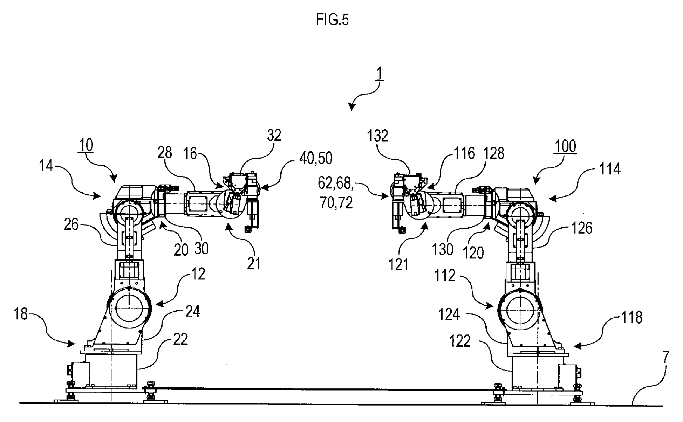

Next, a description will be given of a third embodiment with reference to FIG. 5, in which an articulated robot 100 having a plurality of joints is used in place of the fixed bending device 60 of the first embodiment. The articulated robot 100 has generally the same structure as the articulated robot 10 of the first embodiment; the same components are assigned the same reference numerals as the reference numerals in the first embodiment, and no detailed description thereof will be given herein.

As shown in FIG. 5, the articulated robot 100 comprises a B1 fixing portion 122, a B2 joint 112, a B3 joint 114, a B4 joint 120, a B5 joint 121, a B6 joint 116, a B1 arm 126, a B2 arm 128, and a distal end arm 132, in the same manner as in the articulated robot 10 of the first embodiment.

The B1 fixing portion 122 is a portion serving as a base for installing the articulated robot 100 on the installation surface 7. The B1 joint 118 is a joint mechanism mounted on the B1 fixing portion 122 so as to rotate around an axis of the B1 fixing portion 122.

The B2 joint 112 is a known joint mechanism that is mounted to the B1 joint 118 so as to rotate around an axis perpendicular to a rotation axis of the B1 fixing portion 122. The B3 joint 114 is a known joint mechanism that is mounted at a distal end of the B1 arm 126 so as to rotate around an axis parallel to a rotation axis of the B2 joint 112.

The B4 joint 120 is a known joint mechanism that is mounted in a direction perpendicular to a rotation axis of the B3 joint 114 so as to rotate around an axis perpendicular to the rotation axis of the B3 joint 114. The B5 joint 121 is a known joint mechanism that is mounted at a distal end of the B2 arm 128 so as to rotate around an axis perpendicular to a rotation axis of the B4 joint 120.

The B6 joint 116 is a known joint mechanism that is mounted in a direction perpendicular to a rotation axis of the B5 joint 121 so as to rotate around an axis perpendicular to the rotation axis of B5 joint 121. The B1 arm 126 is a substantially cylindrical arm that is mounted in a direction perpendicular to a rotation axis of the B2 joint 112. The B2 arm 128 is a substantially cylindrical arm that is mounted in a direction of the rotation axis of the B4 joint 120; and the distal end arm 132 is an arm that is mounted in a direction perpendicular to a rotation axis of the B6 joint 116, and is the same arm as the distal end arm of the first embodiment.

In the same manner as in the first embodiment, a clamp mechanism 62 and other components are mounted to the distal end arm 132. According to such bending system 1, it is possible to use a so-called articulated robot as the second bending device in the same manner as the case of the first bending device, and thus it is possible to form the bending system 1 easily and at a lower cost.

### [Fourth Embodiment]

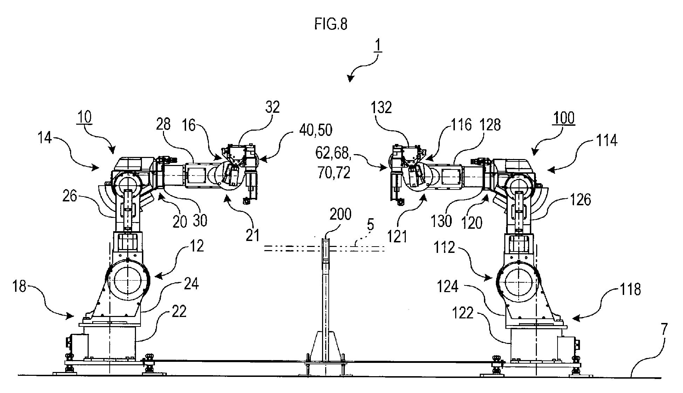

Next, a description will be given of a bending system 1 of a fourth embodiment with reference to FIG. 8.

In the bending system 1 of the fourth embodiment, the same components as those in the bending system 1 of the third embodiment are assigned the same reference numerals. Unlike the bending system 1 of the third embodiment, the bending system 1 of the fourth embodiment comprises a center chuck 200 disposed between the articulated robot 10 and the articulated robot 100.

The center chuck 200 is configured to hold the workpiece 5. With such configuration, in the bending system 1 of the fourth embodiment, bending can be performed concurrently by the articulated robots 10 and 100 from both sides of the center chuck 200. Specifically, it is not required to shift the holding of the workpiece 5 between the articulated robot 10 and the articulated robot 100, and thus bending can be performed continuously. This enables further shortening of the machining time.

### [Other embodiments]

Although some embodiments of the present invention have been described above, the present invention should not be limited to the present embodiments, and may be practiced in various manners.

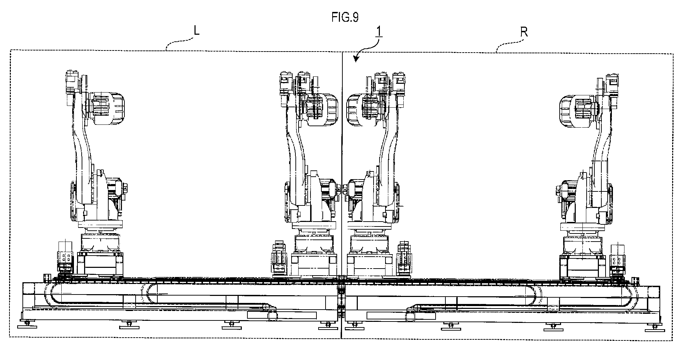

For example, as shown in FIG. 9, the bending system 1 may be configured such that a plurality of articulated robots are arranged and the articulated robots self-travel. In the example in FIG. 9, four articulated robots are arranged so as to be able to self-travel on the same axis.

In the example in FIG. 9, the four articulated robots may be divided into two to form a bending system L and a bending system R. This may result in formation of two sets of the bending systems 1 as shown in FIG. 5 or FIG. 8.

For example, although the supporting plate is rotated by means of the motor 172, and the support extension portion 176 is extended and contracted by means of the extension motor 178 in the above described second embodiment, it may be configured such that rotation and extension/contraction can be performed manually without using the motor 172 or the extension motor 178.

## Claims

1. A bending system comprising:
a first bending device comprising:
a first holding unit configured to hold an elongated workpiece;
a first bending unit configured to bend the workpiece while the workpiece is held by the first holding unit; and
a first moving unit configured to move the first holding unit while the workpiece is held by the first holding unit, to thereby move the workpiece in an axial direction,
a second bending device comprising:
a second holding unit configured to hold the elongated workpiece; and
a second bending unit configured to bend the workpiece while the workpiece is held by the second holding unit, and
a control unit configured to control the first bending device and
the second bending device,
wherein the control unit performs bending of the workpiece by repeating, a specified number of times, the following steps:
a first bending step of bending the elongated workpiece by means of the first bending unit while the elongated workpiece is held by the first holding unit;
a first moving step of moving the workpiece in the axial direction by the first moving unit while executing the first bending step;
a second bending step of causing the second holding unit to hold the workpiece subsequent to the first moving step, releasing the holding of the workpiece by the first holding unit, and bending the workpiece by means of the second bending unit; and
a second moving step of moving the first holding unit to a next bending position while executing the second bending step.

2. The bending system according to claim 1,
wherein the first bending device further comprises:
a first base configured for installation;
an A1 joint provided to the first base so as to rotate around an axis of the first base;
an A2 joint provided to the A1 joint so as to rotate around an axis perpendicular to a rotation axis of the first base;
a first intermediate arm provided in a direction perpendicular to a rotation axis of the A2 joint;
an A3 joint provided at a distal end of the first intermediate arm so as to rotate around an axis parallel to the rotation axis of the A2 joint;
an A4 joint provided in a direction perpendicular to a rotation axis of the A3 joint so as to rotate around an axis perpendicular to the rotation axis of the A3 joint;
a second intermediate arm provided in a direction of a rotation axis of the A4 joint;
an A5 joint provided at a distal end of the second intermediate arm so as to rotate around an axis perpendicular to the rotation axis of the A4 joint;
an A6 joint provided in a direction perpendicular to a rotation axis of the A5 joint so as to rotate around an axis perpendicular to the rotation axis of the A5 joint; and
a distal end arm provided in a direction perpendicular to a rotation axis of the A6 joint, and
wherein the first holding unit and the first bending unit are mounted to the distal end arm.

3. The bending system according to claim 1 or claim 2,
wherein the second bending device further comprises:
an eleventh base configured for installation;
a B1 joint provided to the eleventh base so as to rotate around an axis of the eleventh base;
a B2 joint provided to the B1 joint so as to rotate around an axis perpendicular to a rotation axis of the eleventh base;
an eleventh intermediate arm provided in a direction perpendicular to a rotation axis of the B2 joint;
a B3 joint provided at a distal end of the eleventh intermediate arm so as to rotate around an axis parallel to the rotation axis of the B2 joint;
a B4 joint provided in a direction perpendicular to a rotation axis of the B3 joint so as to rotate around an axis perpendicular to the rotation axis of the B3 joint;
a twelfth intermediate arm provided in a direction of a rotation axis of the B4 joint;
a B5 joint provided at a distal end of the twelfth intermediate arm so as to rotate around an axis perpendicular to the rotation axis of the B4 joint;
a B6 joint provided in a direction perpendicular to a rotation axis of the B5 joint so as to rotate around an axis perpendicular to the rotation axis of the B5 joint; and
a distal end arm provided in a direction perpendicular to a rotation axis of the B6 joint, and
wherein the second holding unit and the second bending unit are mounted to the distal end arm.

4. The bending system according to claim 1 or claim 2, wherein the second bending device further comprises a tilt mechanism configured to be tiltable at an optional angle relative to an axial direction of the workpiece when bending of the workpiece is performed.

5. The bending system according to any one of claim 1 to claim 4, wherein at least one of the first bending device or the second bending device is configured to be movable in a direction of at least one axis of an X-axis that connects respective installation positions of the first bending device and the second bending device, a Y-axis that is horizontal to an installation surface of the second bending device and perpendicular to the X-axis, or a Z-axis that is perpendicular to the X-axis and the Y-axis.
